Europäisches Patentamt

European Patent Office

Office européen des brevets

(19)

(11) Publication number: **0 067 668**
**B1**

(12) **EUROPEAN PATENT SPECIFICATION**

(45) Date of publication of patent specification: **11.11.87**

(51) Int. Cl.⁴: **G 01 F 23/00, G 01 F 23/26**

(21) Application number: **82302999.6**

(22) Date of filing: **10.06.82**

(54) **Apparatus for measuring a metal surface position.**

(30) Priority: **11.06.81 JP 89919/81**
**12.11.81 JP 181492/81**
**22.03.82 JP 45315/82**

(43) Date of publication of application:
**22.12.82 Bulletin 82/51**

(45) Publication of the grant of the patent:
**11.11.87 Bulletin 87/46**

(84) Designated Contracting States:
**DE FR GB IT NL**

(56) References cited:
**DE-A-2 717 530**
**FR-A-2 108 809**
**GB-A-2 021 782**
**US-A-4 074 201**
**US-A-4 186 792**

(73) Proprietor: **Nippon Steel Corporation**
**6-3, 2-chome, Ohte-machi**
**Chiyoda-ku Tokyo 100 (JP)**
(73) Proprietor: **MISHIMA KOSAN CO., LTD.**
**1-5, Edamitsu-2-chome Yahatahigashi-ku**
**Kitakyushi-shi Fukuoka 805 (JP)**

(72) Inventor: **Sawada, Yasuhiro**
**26-9, Sakaecho-3-chome**
**Fuchu-shi (JP)**
Inventor: **Inoue, Tadashi**
**1227, Shimosakae**
**Noogata-shi (JP)**
Inventor: **Nishida, Toyoaki**
**20-3-30-2, Numamidoricho-4-chome**
**Kokuraminami-ku Kitakyushu-shi (JP)**
Inventor: **Tatsumi, Hironori**
**528, Oaza Akaike Akaikecho**
**Tagawa-gun Fukuoka-ken (JP)**

(74) Representative: **Nettleton, John Victor et al**
**Abel & Imray Northumberland House 303-306**
**High Holborn**
**London, WC1V 7LH (GB)**

Courier Press, Leamington Spa, England.

## Description

The present invention relates to an apparatus for measuring metal surface position, and more particularly to an apparatus for non-contact measuring a surface position of metallic mass such as molten steel, shielded and unaccessible metal or moving metal which is difficult to be directly measured.

In detecting the level of molten steel in a mold of a continuous steel casting, an automatic tracing or follow measuring apparatus has been proposed, in which a detection coil which is movable by a servo motor is arranged at a predetermined distance from a molten metal surface, change of distance between the melt surface and the detection coil due to movement of the melt surface is detected from a change in inductance of the detection coil, the servo motor is driven by the detection signal so that the detection coil is moved to maintain the predetermined distance from the melt surface and the melt surface is measured based on the distance in movement of the detection coil driven by the servo motor. Such a measuring apparatus is disclosed in, for example, Japanese Patent Publication No. 54—42846, and Japanese Patent Application No. 53—152949. However, the measuring from change in inductance is valid only when the inductance varies linearly to the change of distance. Since some noises due to influence of the mold or a peripheral equipment are usually included, the distance between the molten steel surface and the detector is not always in linear relationship with the inductance of the detector.

US—A—4 186 792 discloses a molten metal level monitoring and controlling apparatus for a continuous casting machine. Detecting means in the form of an eddy-current type distance measuring device is used for measuring molten metal level and comprises a feedback amplifier circuit including a detecting coil disposed just above the surface of the molten metal, an AC constant-voltage reference oscillator for providing AC voltage, a differential amplifier, a positive feedback circuit and an amplitude detection circuit. In one example, a supporting mechanism for positioning the detecting means just above the surface of the metal is provided with a vertical shifting mechanism including a servomotor for vertically moving the detecting means and controlled to maintain a preset distance between the detecting means and the surface of the molten metal.

US—A—4 074 201 discloses a signal analyzer with noise estimation and signal to noise readout in which a baseband signal including noise is compared at timed intervals with a reference signal and an estimated noise signal from a noise generator. Indications of whether the estimated noise signal is higher or lower than the noise level present are applied to a digital accumulator in the estimated noise signal generator. Certain of the most significant bits in the accumulator are employed to generate an analog estimated noise signal.

Accordingly, it is an object of the present invention to provide an apparatus for measuring a metal surface position from a change in impedance of a detection coil due to a change of a distance between the detection coil and the metal surface, in which noises due to metallic subjects other than the metal to be measured are eliminated to allow precise measurement of the metal surface position.

According to the present invention, there is provided an apparatus for measuring a change along a predetermined direction of a surface position of a metallic mass comprising:

a magnetic sensing type metal sensor reciprocally movable along said predetermined direction and arranged in spaced relation to said surface position,

drive means operative to drive said sensor along said predetermined direction,

follow-surface means for comparing an output of said sensor with a predetermined reference distance value and activating said drive unit in accordance with a difference signal of the comparison for causing said sensor to follow the change along said predetermined direction of the surface position of said metallic mass,

means for producing a position signal indicative of a current position of the sensor along a moving path thereof and determining the surface position of said metallic mass based on said position signal, characterized by:

noise storing means for measuring a noise component in the output of said sensor due to factors other than the change of the surface position of said metallic mass and storing said noise component; and

correction means for correcting said difference signal by said noise component stored in said storing means for activating said drive unit by the corrected signal.

The features of the present invention will be well understood from the following description of the embodiments of the present invention with reference to the accompanying drawings in which:

Fig. 1 shows a block diagram of a circuit arrangement of a measuring apparatus of the present invention,

Fig. 2 shows a noise characteristic due to peripheral equipments in a detection output of a detection coil used in the present invention,

Figs. 3 and 4 show output characteristics of the measuring apparatus of Fig. 1,

Figs. 5, 6 and 7 show block diagrams of circuits of other embodiments of the present invention,

Figs. 8 and 9 show flow charts for computer processing in the embodiment of Fig. 7,

Figs. 10 and 11 a plan view and a side view, partly broken, respectively, of a detector head and a support structure therefor used in the present invention,

Fig. 12 shows an enlarged sectional view of the detection head, taken along a line XII—XII of Fig. 10,

Fig. 13 shows a plan view of a detection coil support plate,

Fig. 14 shows a sectional view of a structure of another detection head used in the present invention, and

Fig. 15 shows connection of coils of the detection head of Fig. 14.

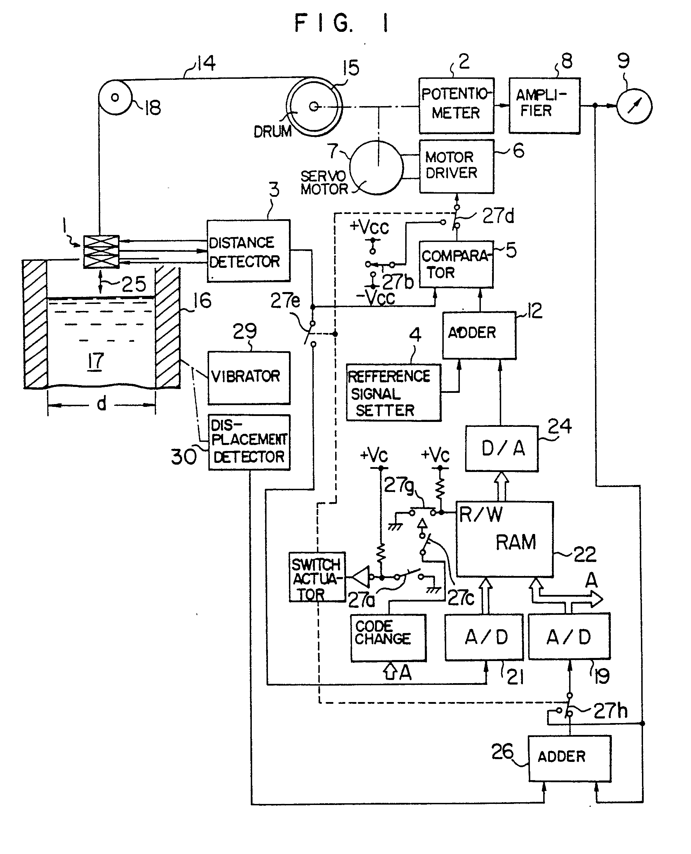

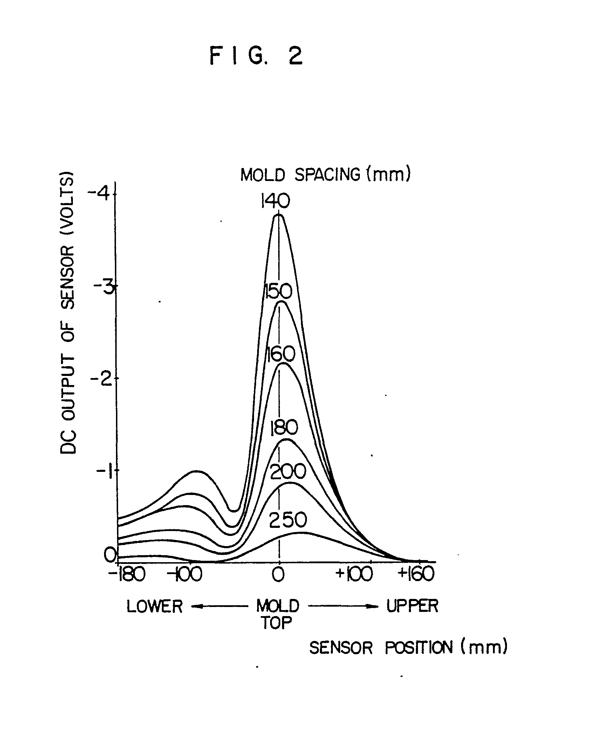

With reference to Fig. 1 showing a circuit configuration of one embodiment of the present invention, which is particularly designed to measure a melt surface position or level in a mold of a continuous casting for making steel slabs, numeral 1 denotes a detector which uses a magnetic sensor of flux-balanced type numeral 2 denotes a potentiometer, numeral 3 denotes a distance detector, numeral 4 denotes a reference level setter, numeral 5 denotes a comparator, numeral 6 denotes a servo circuit, numeral 7 denotes a servo motor, numeral 8 denotes an amplifier, numeral 9 denotes a level indicator, numeral 14 denotes a strip for transmitting the driving power of the servo motor to the sensor 1, numeral 18 denotes a free wheel, numeral 15 denotes a strip take-up drum, numeral 16 denotes a mold and numeral 17 denotes molten steel. As is well known, in the continuous casting for steel slab, the molten steel is supplied into the mold 16 from a tundish (not shown) disposed above the mold 16, while the molten metal is discharged as cooled in a form of solidified slab of a rectangular cross-section from the bottom of the mold 16 so that the slab is continuously casted. A mold spacing $d$ between side walls of the mold 16 determines a slab thickness and it varies with a dimension of the slab to be casted. In accordance with a difference between the quantity of the molten steel supplied into the mold 16 from the tundish and the quantity of the discharged molten metal from the bottom of the mold 16, the surface level of the molten steel 17 in the mold 16 changes. The sensor 1 has a detection coil as described later, and when a distance 25 between the sensor 1 and the molten steel level changes, the impedance of the detection coil changes and the sensor produces an electrical signal representative of the change of the distance 25. The electrical signal is detected and amplified by the distance detector 3, an output signal of which is applied to the comparator 5. In the prior art, the output signal of the distance detector 3 is compared with a predetermined reference signal indicative of a predetermined value of the distance between the sensor and the molten metal surface and an error signal therebetween is supplied to the servo motor 7 through the motor driver 6 to drive the servo motor 7, which is turn drives the sensor 1 through the strip 14 wound on the drum 15 to maintain the distance 25 at the predetermined length. Thus, the displacement of the level of the molten steel 17 corresponds to the distance of movement of the strip 14 by the servo motor 7, and the distance of movement is converted by the potentiometer 2 to an electrical signal, which indicated by the indicator 9 through the amplifier 8 and/or used to control other associated devices (not shown). In such a prior art method, however, it has been found that the output of the sensor 1 significantly changes by noises due to such as influences by a change of size of the mold 16 depending on the dimension of the slab to be casted or a change of the position of the sensor 1 relative to the mold 16. Fig. 2 shown relationships between outputs of the sensor 1 and the positions of the sensor 1 relative to the mold 16, measured for various mold spacings $d$. An ordinate represents a D.C. output (in volts) of the sensor 1 and an abscissa represents a vertical position of the sensor 1 relative to the mold. The sensor position corresponding to the top of the mold 16 is represented by "0", and the sensor 1 is descended from a position at 155 mm higher than the top of the mold to a lower limit position at −180 mm therefrom. In each mold spacing, the output is more or less influenced by the mold. The influence is largest when the sensor is positioned at "0" mm or near, i.e. near to the top of the mold and the influence is observed even when the sensor is positioned around −80 mm— −100 mm therefrom. The smaller the mold spacing is, the larger is the influence by the mold. When the distance between the molten metal level and the sensor is 90 mm and the reference voltage is −2 volts, it is seen that the mold spacing of 160 mm or less is unmeasurable, and the mold spacing of 180, 200 and 250 mm have errors of 5—40 mm. Thus, it will be seen that the metal surface position detector using a magnetic sensor is affected by not only the metal surface to be measured but also the periphery into which the magnetic fluxes thereof are introduced.

The same is true for a sensor which uses an electro-magnetic coil. When the molten steel level in the mold is measured, the sensor is influenced by not only the molten steel surface but also the mold surface and the periphery.

In the magnetic flux-balanced sensor, it is seen from Fig. 2 that an error from an ideal value amounts to a value corresponding to 18 mm of the distance between the metal surface and the sensor for the mold spacing of 200 mm, although it depends on the size of the sensor. When the mold spacing is 180 mm or less, the error amounts to a value corresponding to 30 mm of the distance which may be larger than the actual distance to the molten steel level. As a result, it cannot follow the molten steel level in the mold and senses the mold as if it were the molten steel level, thereby preventing the sensor from following the molten steel level.

In the present invention, the noises or the influences imparted to the measurement due to the factors other than the metal surface-to-sensor distance, as shown in Fig. 2, are stored in a memory, and they are read out of the memory in the measurement operation and applied as correction factors to a measurement control system including the sensor 1 and the motor driver 6. Simply speaking, the detected value less the noises is used as the sensor-to-metal surface distance signal.

The embodiment of Fig. 1 embodies the above principle of the present invention. Numeral 22 denotes a static random access memory (RAM) which is used as the memory described above. Read/write addresses of the RAM 22 are specified by output data of an A/D converter 19. When the environmental noise is written to the RAM 22, an output of the amplifier 8, that is, a sensor level signal is supplied to the A/D converter 19 through a switch 27h while keeping the mold 16 stationary and moving the sensor 1 from the lower limit position to the upper limit position by the servo motor 7, and when the molten steel level is measured, a sum output of an adder 26 is supplied to the A/D converter 19. As well known, in an actual operation, an up-and-down mechanical vibration of constant-cycle and constant-amplitude is applied to the mold 16 by a vibrator 29 so that the relative position of the sensor 1 to the mold 16 periodically changes. In order to compensate for this change, a vibration displacement from a bottom dead point of the vibration is sensed by a displacement sensor 30 and it is applied to the adder 26 where it is added to the position signal of the sensor 1, i.e. the output of the amplifier 8, and the relative position of the sensor 1 to the mold 16 is applied to the A/D converter 19. An A/D converter 21 supplies the write data to the RAM 22. When the environmental noise is written into the RAM 22, the distance signal from the detector 3 is applied to the A/D converter 21 through a switch 27e.

When a read/write (R/W) switch 27g is closed, the output data of the A/D converter 21 is stored in the RAM 22 at the address specified by the output data of the A/D converter 19, and when the switch 27g is open, the stored data (environmental noise) of the RAM 22 at the address specified by the output data of the A/D converter 19 is read out to a D/A converter 24. The D/A converter 24 converts the readout data to an analog signal, which is then applied to the adder 12. The adder 12 adds a reference value from the setter 4 to the readout value and supplies a resulting sum to the comparator 5. The reference value represents a predetermined distance which is to be maintained between the sensor 1 and the metal surface under measurement. The operations of the comparator 5, the motor driver 6 and the servo motor 7 have been described above. A switch 27d is inserted between the comparator 5 and the motor driver 6. In a write operation in which the environmental noise (hereinafter referred to as a noise data) is set to the RAM 22, the switch 27d is in a position to connect the motor driver 6 to a motor forward/ backward switch 27b. Numeral 27a denotes a noise data write switch, numeral 27c denotes a write switch which is closed in the write operation, and numeral 27f denotes a code change detector which produces a write pulse (plus H) of a predetermined duration when the output code from the A/D converter 19 changes. The code change detector 27f latches the output code from the A/D converter 19 and compares the latched code with the next output code from the A/D converter 19, and if they are not equal, it updates the latched code by the newly applied code and produces the write pulse. The latched code is initially set to "0" at the start of the operation.

The noise data write operation is now explained in a case where the write operation is carried out when the molten metal is absent. An operator first closes the switch 27a. As a result, the switch 27b is connected to the motor driver 6 through the switch 27d, the switch 27e is closed and the output line of the amplifier 8 is connected to the A/D converter 19 through the switch 27h. Then, the mold 16 is located at the bottom dead point in vibration of the mold by the vibrator 29 and throws the switch 27b to a side of +Vcc or −Vcc so that the motor 7 is driven forwardly or backwardly to move the sensor 1 to the bottom point or the top point of the vertical movement range. For the sake of convenience to the following description, it is assumed that the motor 7 is driven forwardly (by applying a voltage of +Vcc) to position the sensor 1 at the bottom point. Then, the operator closes the switch 27c and throws the switch 27b to the side of −Vcc. As a result, the motor 7 is driven backwardly at a constant speed so that the sensor 1 is moved up at a constant speed. As the sensor 1 goes up, the output voltage (sensor level signal) of the amplifier 8 linearly changes. Consequently, the digital output value of the A/D converter 19 changes by "1" each time when the analog output value of the amplifier 8 changes by the amount corresponding to the minimum unit of the digital output of the A/D converter 19. When the digital output of the A/D converter 19 changes by "1", the detector 27f produces a pulse, which causes the switch 27g to be closed through the switch 27c to instruct the "write" operation to the RAM 22. Thus, each time when the sensor 1 goes up by the distance corresponding to the minimum unit of the A/D converter 19, that is, each time when the output code of the A/D converter 19 changes by "1", the current output or the current noise data of the detector 3 is written into the RAM 22 at the address specified by the output code. When the sensor 1 reaches the top point, the operator returns the switch 27b to a neutral position to stop the motor 7 and opens the switch 27c.

The measurement operation is now explained. After the molten steel 17 has been supplied to the mold 16, the operator opens the switch 27a. As a result, the comparator 5 is connected to the motor driver 6 through the switch 27d, the switch 27e is opened, and the adder 26 is connected to the A/D converter 19 through the switch 27h. Consequently, the adder 26 supplies to the A/D converter 19 the relative position signal, which is derived by correcting the position of the sensor 1 (output of the amplifier 8) by the displacement due to the vibration of the mold 16. Thus, the access address of the RAM 22 is specified by the relative positon data of the sensor 1 to the vibrating mold 16 and the noise data stored at the specified address is read out and converted to an analog data by the D/A converter 24, and the analog data is supplied to the adder 12 where it is added to the value representing the predetermined reference distance 25, and a resulting sum is applied to the comparator 5. The comparator 5 compares the output of the distance detector 3 with the output of the adder 12 and produces a signal (plus or minus) representing a difference therebetween, that is, a difference between the detector output less the environmental noise, which should represent the correct metal surface distance, and the reference value. This signal is supplied to the motor driver 6 through the switch 27d. As a result, even when the metal surface moves up and down, the follow-surface control to keep the distance between the metal surface and the sensor 1 at the reference distance can be attained. In the prior art, as described above, the distance between the metal surface and the sensor 1 could significantly deviate from the reference distance because of the inclusion of the noise in the detector data and hence the indication by the indicator 9 includes a large error. In the present embodiment, since the reference value is corrected by the adder 12 so that the environmental noise is cancelled at the comparator 5, the sensor 1 exactly follows the movement of the metal surface and the distance between the metal surface and the sensor 1 is kept at the reference value and therefore, the indication of the indicator 9 is exact.

The write operation described above is carried out under a conditon that no molten steel exists in the mold 16. In order to further reduce the error, it is advisable to fix a non-magnetic metal plate of about 10 mm thickness such as lead plate or aluminum plate to the sensor 1 at a position below the sensor 1 spaced by a distance equal to the reference distance between the sensor 1 and the metal surface to be measured and to move the sensor 1 together with the non-magnetic metal plate up and down in the mold 1 and store the output values of the sensor 1 at various levels of the sensor 1.

Since the molten steel is non-magnetic, the non-magnetic metal plate is substantially equivalent to the molten steel to be measured. Thus, the output of the sensor includes the value representing the distance which would exist between the sensor 1 and the molten metal surface if the sensor 1 exactly follows the molten metal surface with the reference distance and the enviromental noises. Therefore, when the write operation is carried out in this manner, it is not required in the measurement operation to add the reference distance to the output of the D/A converter 24 in the adder 12 and thus, the reference signal setter 4 and the adder 12 can be omitted.

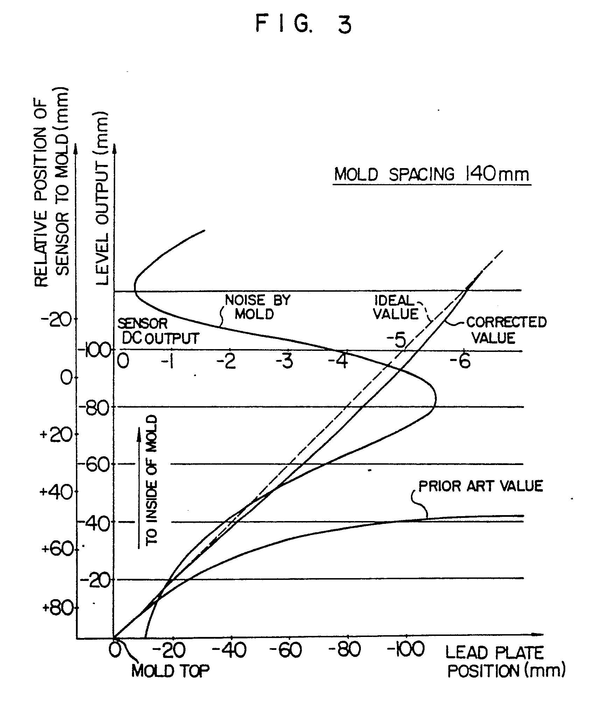

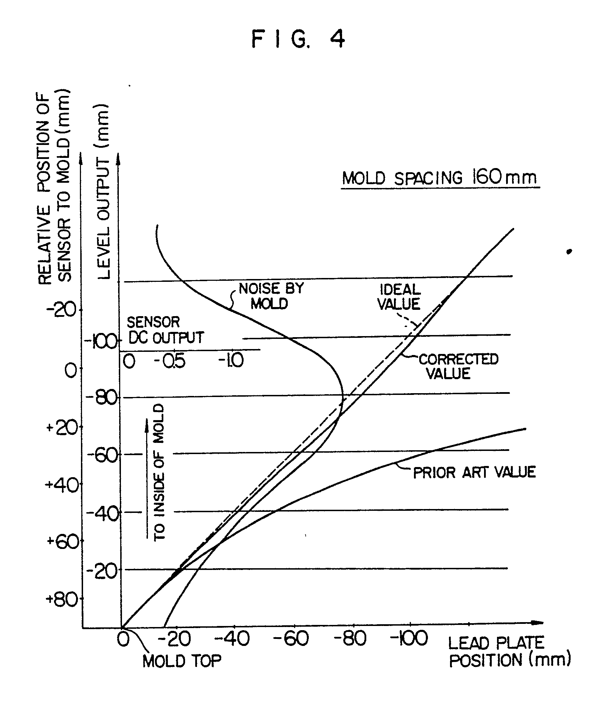

Figs. 3 and 4 show relations between the level of the sensor 1 or the level output and the level of the lead plate surface (corresponding to the molten metal level) with mold spacings of 140 mm and 160 mm. The noise by the mold, an ideal measurement value, a comparative value by the prior art and a corrected measurement value by the present invention are plotted. The ordinate represents the level (mm) of the sensor 1 or the level output and the abscissa represents the lead plate surface level (mm) (corresponding to the molten metal level). In the measurement, the reference distance between the sensor 1 and the lead plate surface is set to 90 mm. Thus, the sensor 1 detects the lead plate surface from a position distant by 90 mm therefrom. The noise by the mold 16 is shown by a DC output of the sensor 1. The sensor 1 used in the measurement is different from that used in the measurement of Fig. 2 and hence the output values are different from each other.

In the prior art, as seen from the figures, the sensor 1 cannot descend below +48 mm level from the top end of the mold when the mold spacing is 140 mm and hence the sensor 1 does not follow the level change of the lead plate surface but senses as if the lead plate were at the level of +48 mm. For the 160 mm mold spacing, the sensor 1 cannot descend below a level of +20 mm and also it involves a larger error from the ideal value so that the sensor 1 cannot be applicable to the level measurement. When the noise by the mold 16 is compensated in accordance with the present invention, an error from the ideal value is 5 mm at maximum, if not zero, and the present invention significantly facilitates the measurement and improves the accuracy in measurement. While not shown in Figs. 3 and 4, when the noise by the mold 16 was compensated by using the noise data measured as moving the metal plate together with the sensor 1 as described above, an error from the ideal value was less than 1 mm.

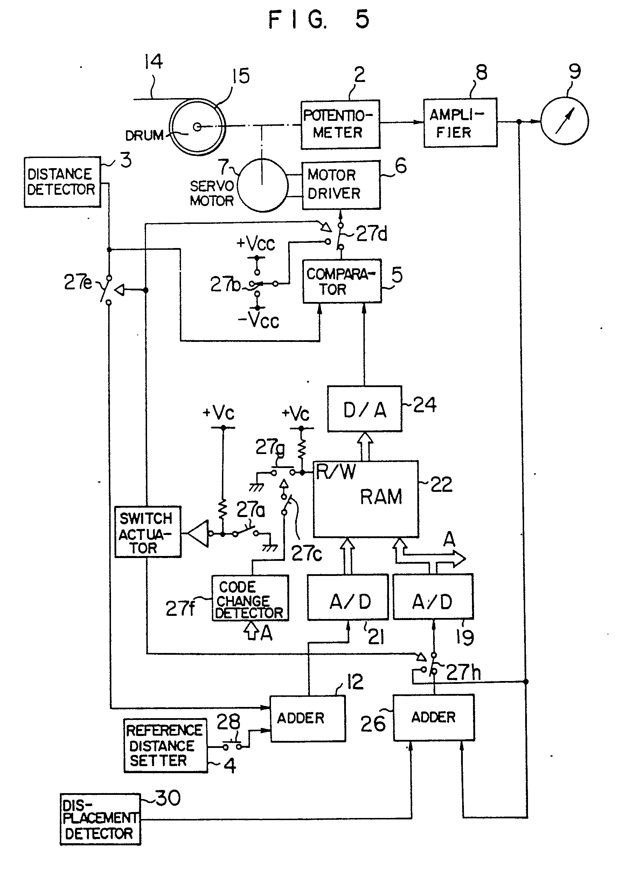

In the embodiment shown in Fig. 1, the output signal from the static RAM 11 and the output signal from the reference level setter 4 are added together by the adder 12. Alternatively, as shown in Fig. 5, the output signal from the detector 3 connected to the sensor 1 and the output signal from the reference level setter 4 may be applied to the adder 12 and a resulting sum may be stored in the RAM 22. In this case, during the write operation of the noise data by moving the sensor 1 up and down, a switch 28 is closed if the mold 16 is empty and opened if the non-magnetic metal plate (e.g., lead plate or aluminum plate) is attached below the sensor 1.

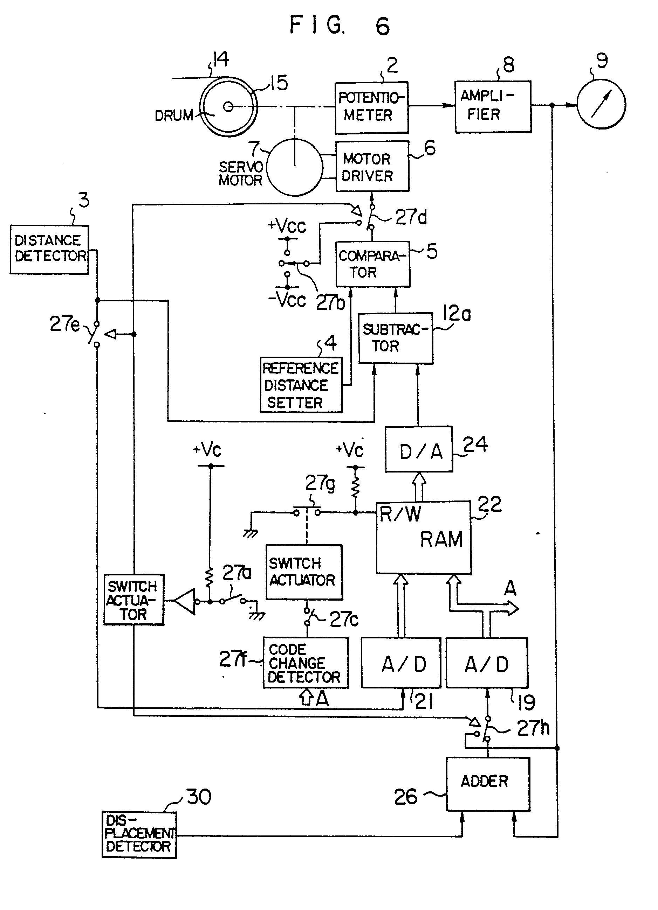

In Fig. 6, the adder 12 is replaced by a subtractor 12a so that the noise data stored in the RAM 22 is subtracted from the output signal of the detector 3 connected to the sensor 1, and a resulting difference is compared with the output signal from the reference level setter 4.

In this embodiment, the write operation may be carried out by using a non-magnetic metal plate fixed to the sensor 1 with a predetermined distance therebetween. In that case, the output of the subtractor 12a is directly applied to the motor driver 6.

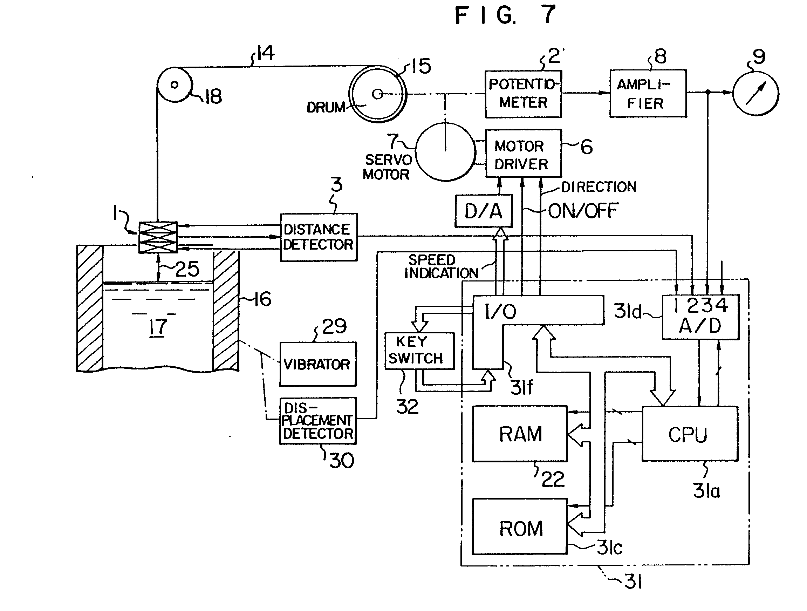

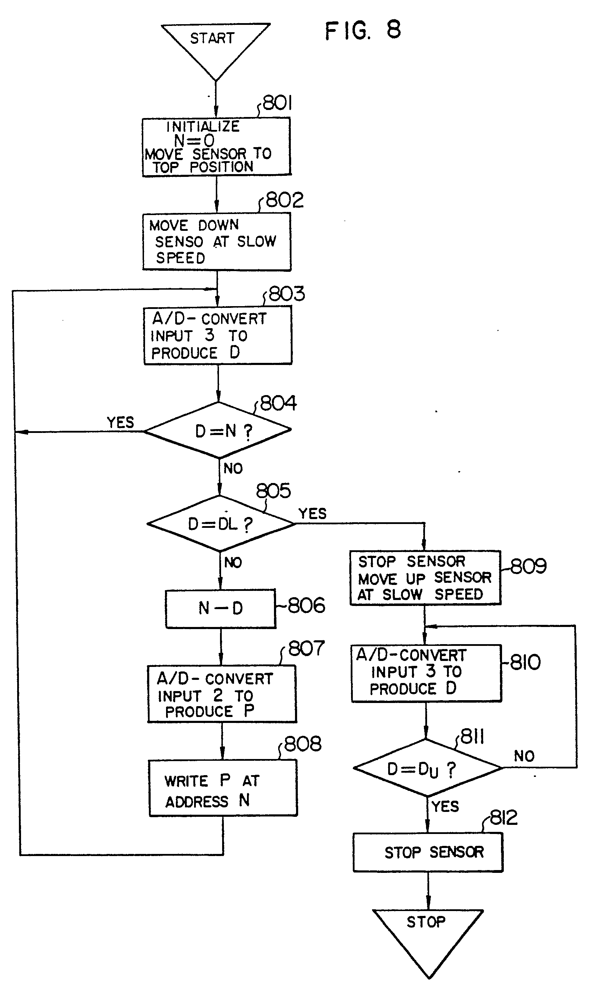

Fig. 7 shows another embodiment, in which a microcomputer system 31 writes the noise data and effects the follow-surface control of the sensor 1 in the measurement operation by actuation of a key switch 32. In the microcomputer system 31, when the key switch 32 is closed to instruct the write operation of the noise data, a central processing unit (CPU) 31a starts to execute a memory routine shown in a flow chart of Fig. 8 under control of a program stored in a ROM 31c. In a step 801, the system 31 is initialized so that the data N which specifies the write address of the RAM 22 is set to "0" and the motor 7 is driven to position the sensor 1 at the top position. In a step 802, the motor driver 6 is instructed to descend the sensor 1. Then the program proceeds with the steps for writing the noise data in the RAM 22. That is, in a step 803, an A/D converter 31d is instructed to A/D-convert a signal on its input channel 3 and produce a resulting converted data D, and if the converted data is different from the previously stored write address data (step 804), the current converted data D is used to update the write address N of the RAM 22 (step 806). Then, the A/D converter 31d is instructed to A/D-convert a signal on its input channel 2 and produce a converted data P (step 807), and the data P is written into the RAM 22 at the address N (step 808). The above operation is repeated until the converted data D of the input channel 3 of the A/D converter 31d assumes a value DL representing the bottom point of the sensor 1, when the motor driver 6 is instructed to stop the downward movement and start the upward movement (steps 808 and 809). When the converted data D of the input channel 3 of the A/D converter 31d assumes a value Du representing the top point, the motor driver 6 is instructed to stop the motor (steps 811 and 812). Thus, the memory routine terminates.

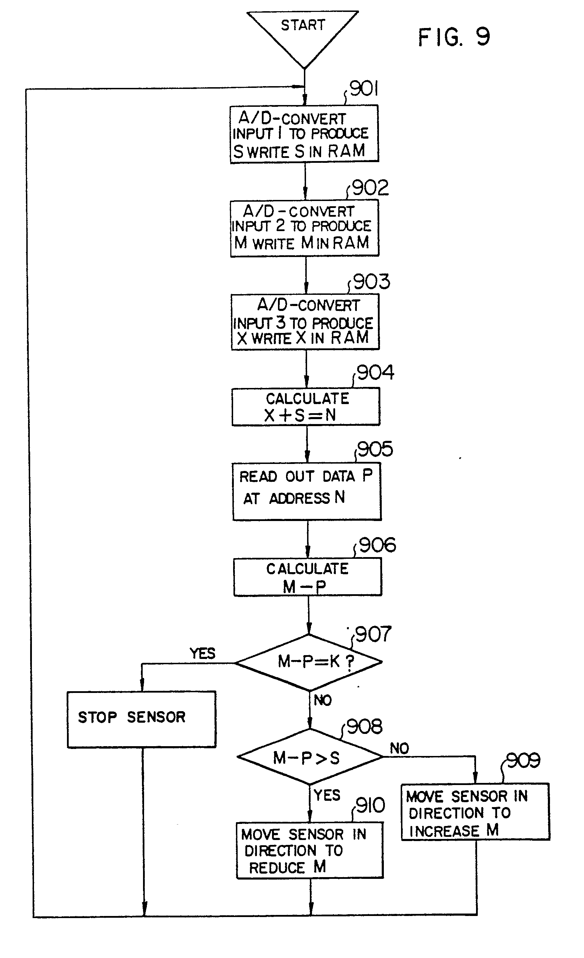

When the key switch 32 is operated to instruct the measurement operation, the system 31 executes a measurement routine shown in Fig. 9 under control of the program stored in the ROM 31c to measure the metal surface level. The system 31 instructs the A/D converter 31d to convert signals on its input channels 1, 2 and 3 sequentially and reads out vibration displacement data S, detection distance data M and sensor level data X, respectively (steps 901, 902 and 903), calculates X+S=N (step 904), accesses to the address N of the RAM 22 to read out the noise data P (step 905), calculates M−P which should correspond to a compensated exact distance measurement value (step 906), compare a resulting difference M−P with the predetermined reference distance data K (step 907), if they are equal, instructs to stop the movement of the sensor 1 and repeats the above steps, and if they are not equal, instructs to drive the motor 7 to move the sensor 1 in the direction to cause them equal (steps 909 and 910), and then returns to the step 901.

The above memory routine and the measurement routine are executed at a timing determined by clock signals from a clock signal generator (not shown) contained in the system 31. One cycle of each routine is selected to be shorter than a time period required for the sensor 1 to be moved by a distance corresponding to the minimum unit of the digital value which is derived from the A/D conversion of the signal on the input channel 3 of the A/D converter 31d.

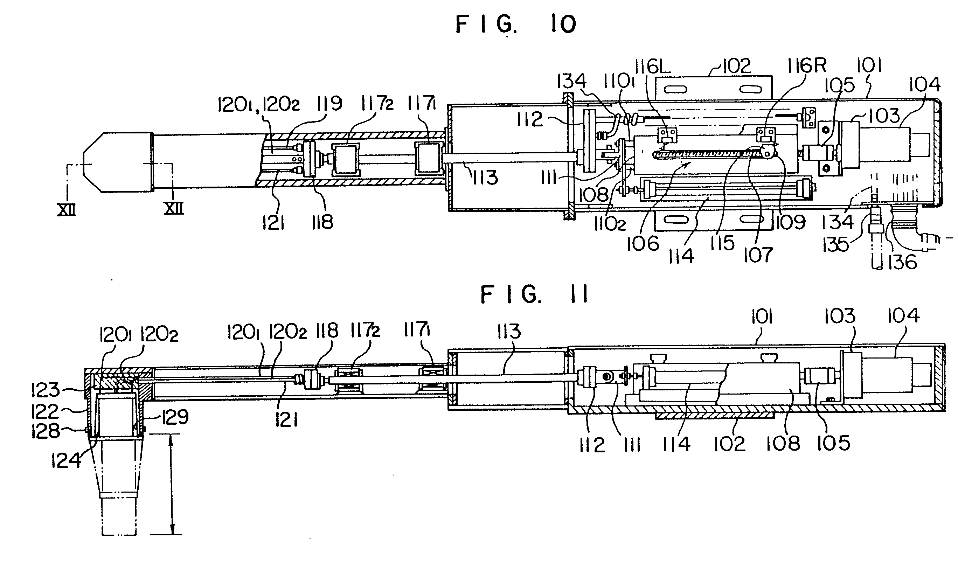

Referring to Figs. 10, 11, 12 and 13, the sensor 1 and a drive mechanism therefor used in the present invention are explained. It should be understood that those are but examples and any other structures may be used.

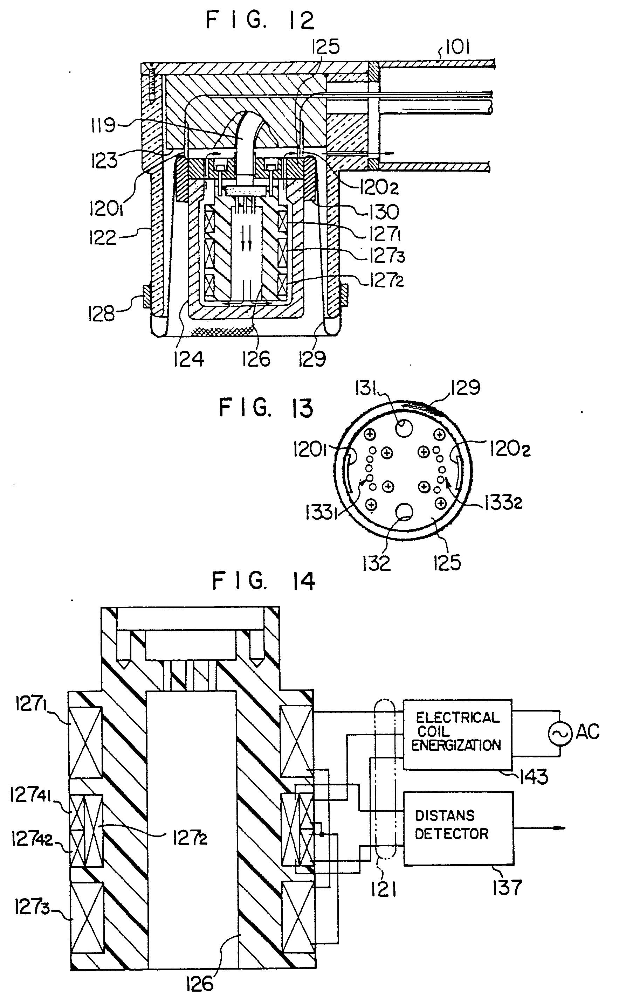

It should be noted that, in the embodiment of Fig. 1, the strip 14 is connected at its one end to the rotating drum to be wound on or rewound from the drum for vertically moving the sensor by rotating the drum forwardly or reversely. However, in the embodiment of Figs. 10 and 11, the drum is replaced by a mechanism for converting the rotational movement into a linear movement. This mechanism is useful to readily and accurately measure the moving distance of the sensor or the strip.

In those figures, secured to a hollow elongated box-shaped support arm 101 is a base plate 102 for fixing the support arm 101 to a rotary support (not shown) mounted near the mold to position the support arm 101 to a sensing position on the opening of the mold and an evacuated position which is off the opening of the mold. A servo motor 104 (corresponding to the servo motor 7 shown in Fig. 1) having a reducing gear 104 coupled thereto is mounted in the support arm 101, and one end of a lead screw 107 of a reciprocating mechanism 106 is coupled to an output shaft of the reducing gear 103 through a coupling 105. The other end of the lead screw 107 is pivoted to a frame 108. The lead screw 107 is threadedly engaged with a nut 109 which is fixed to an end plate secured to ends of guide bars $110_1$ and $110_2$. The guide bars $110_1$ and $110_2$ are slidably guided by the frame 108 along an axis of the lead screw 107, and one end of a pipe 113 is coupled to an end plate 111 secured to the other ends of the guide bars $110_1$ and $110_2$ through a dram guide member 112. A slider arm of a linear potentiometer 114 is coupled to the end plate 111. When the motor 104 is rotated in one direction (forward direction), the lead screw 107 is rotated forwardly so that the nut 109 is moved leftward to move the pipe 113 and the slider arm of the potentiometer 114 leftward. When the motor 104 is rotated in the opposite direction, those elements are moved rightward. A switch actuation cam 115 is coupled to the nut 109 and it closes a limit switch 116R when the nut 109 reaches the rightmost position and closes a limit switch 116L when the nut 109 reaches the leftmost position. By the closure of the limit switch 116R or 116L, the backward drive or the forward drive of the motor 104, respectively, is stopped.

The pipe 113 is supported by a pair of bearings $117_1$ and $117_2$ secured to the support arm 101 and a draw guide member 118 is secured to a left end of the support arm 101. Ends of a flexible air pipe 119, a pair of elongated strips or belt-shaped plates $120_1$ and $120_2$ each having an arc-shaped cross section and an electrical cable 121 are coupled to the draw guide member 118.

A heat resistive, non-magnetic tubular ceramic end member 122 and a belt plate guide 123 are secured to the left end of the support arm 101. An upper side wall of the end member 122 has an opening through which the pipe 119, the belt plates $120_1$ and $120_2$ and the cable 121 extend. The belt plate guide 123 has curved guide passages of a predetermined radius of curvature through which the pipe 119, the strips $120_1$ and $120_2$ and the cable 121 extend separately. The strips $120_1$ and $120_2$ are corresponding to the strip 14 in Fig. 1 and made of flexible and linerealy restitutive material. The pipe 119, the strips $120_1$ and $120_2$ and the cable 121 extending from those guide passages lead to a support plate 125 secured to a heat resistive, non-magnetic ceramic tube 124. The pipe 119 and the cable 121 extend through the support plate 125 and extend into a space within an electrical coil support tube 126 in the ceramic tube 124, and the strips $120_1$ and $120_2$ are secured to the support plates 125. Three electrical coils $127_1$, $127_2$ and $127_3$ are wound on the support tube 126 and lead wires of the electrical cable 121 are connected to those coils. The pipe 119 opens into the space within the support tube 126 so that pressurized air from the pipe 119 is injected into the support tube 126. An air gap is formed between an outer surface of the support tube 126 and an inner surface of the ceramic tube 124. The injected air passes through the air gap, an evacuation port of the support plate 125 and an evacuation port of the ceramic end member 122 and flows into the support arm 101.

Secured to a bottom opening of the end member 122 is a bottom opening edge of a tubular (bag-like) heat resistive glass wool cloth 129, and a top opening edge of the cloth 129 is secured to a side periphery of the support plate 125 by a heat resistive ring 130 (Fig. 12). Thus, the pipe 119, the strips $120_1$ and $120_2$ and the cable 121 between the support plate 125 and the strip guide 123 are surrounded by the heat resistive cloth 129 and the end member 122 and they are cooled by the air which is injected into the ceramic tube 124, evacuated from the evacuation port of the support plate 123 and flows into the support arm 101.

Fig. 13 shows a top surface of the support plate 125. Numeral 131 denotes an aperture through which the air pipe 119 extends, numeral 132 denotes an aperture through which the electrical cable 121 extends and numerals $133_1$ and $133_2$ denote air evacuation ports.

Referring back to Fig. 10, the air pipe 119 communicates with the inside of the pipe 113 through the aperture of the draw guide member 118, the pipe 113 communicates with a flexible air pipe 134 through the aperture of the draw guide member 118, and the air pipe 134 is connected to a pipe connector 135 at a right end of the support arm 101. In measuring the level of the molten metal, pressured cool air is supplied into the pipe connector 135. The electrical cable 121 passes through the guide member 118, the pipe 113 and the guide member 112 and is connected to the electrical lead connected to the connector 136 at the right end of the support arm 101.

With this arrangement, when the motor 104 is driven forward or backward, the ceramic tube 124 supported by the strips $120_1$ and $120_2$ is moved down or up, and the cool air is blown into the tube 124, and the electrical coils $127_1$—$127_3$ are energized and the signal is detected and processed.

While the electrical coils $127_1$—$127_3$ are surrounded by the ceramic tube 124 having a closed bottom in the illustrated embodiment, they may be surrounded by a heat resistive cloth like the heat resistive glass wool cloth 29. The tube 24 may be opened at the bottom and the tube may be surrounded by the bag-like heat resistive glass wool cloth 29. While two belt plates are shown in the illustrated embodiment, a single belt plate may be used when the lifting head 124, 25, 26 is of light weight and/or the strip is of wide width. Usually, two or more strips are used to attain a high stability of the lifting head. Accordingly, it is desirable to use two strips as shown in the illustrated embodiment or more than two strips.

The illustrated sensor 1 has two exciting electrical coils $127_1$ and $127_2$ and a detection coil $127_3$. The exciting coils $127_1$ and $127_2$ are energized even when the metal to be sensed is absent so that magnetic fluxes generated by the exciting coils $127_1$ and $127_2$ are cancelled at the intermediate detection coil $127_3$. Accordingly, linkage flux to the intermediate detection coil $127_3$ is zero and an output thereof is also zero. When the metal to be sensed is present, impedances of the coils $127_1$ and $127_2$ change and a balance of the magnetic fluxes is lost so that linkage fluxes are produced in the detection coil $127_3$ and the coil $127_3$ produces an output. The magnitude thereof depends on a degree of unbalance, that is, a distance between the metal and the coils.

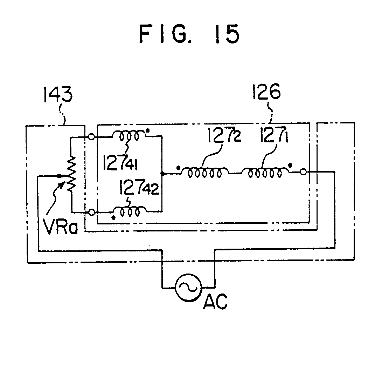

In actual use, however, it is very difficult to balance the magnetic fluxes because the magnetic fluxes generated by the exciting coils $127_1$ and $127_2$ at the opposite ends change with temperature of the coils. Accordingly, as shown in Fig. 14, an additional pair of third exciting coils $127_{41}$ and $127_{42}$ are wound and they are connected to the first and second exciting coils $127_1$ and $127_2$ in a manner shown in Fig. 15, in which VRa denotes a potentiometer for adjusting a current balance. The coils $127_1$ and $127_2$ are wound in such directions that the magnetic fluxes generated thereby are of opposite polarites to each other, and the coils $127_{41}$ and $127_{42}$ are wound in such directions that the magnetic fluxes generated thereby are of opposited polarities to each other. Since the coils $127_1$ and $127_2$ are connected in series and they have equal number of turns, the magnetic fluxes generated by the coils $127_1$ and $127_2$ are cancelled out at the position of the coil $127_3$ but the magnetic fluxes at the position of the coil $127_3$ is not completely zero because of the deformation of the windings of the coils $127_1$ and $127_2$ and the displacement of the coils $127_1$ and $127_2$ to the coil $127_3$. Thus, the currents to the third coils $127_{41}$ and $127_{42}$ are

differentially adjusted by the potentiometer VRa to bring the magnetic fluxes at the position of the coil $127_3$ to be substantially zero. The currents in the first and second coils $127_1$ and $127_2$ do not substantially change by the adjustment of the potentiometer VRa because when the current to the coil $127_{41}$ (or $127_{42}$) is increased by the potentiometer VRa, the current to the coil $127_{42}$ (or $127_{41}$) is reduced correspondingly, and the sum of the currents to the coils $127_{41}$ and $127_{42}$ is supplied to the first and second coils $127_1$ and $127_2$. In this manner, by adjusting the potentiometer VRa, a balanced magnetic field is established at the position of the coil $127_3$.

When a temperature of the coil support tube 126 rises or falls, the currents in the coils $127_1$, $127_2$, $127_{41}$ and $127_{42}$ slightly change because the resistances of the coils $127_1$, $127_2$, $127_{41}$ and $127_{42}$ change. However, since the coils $127_1$ and $127_2$ are connected in series, the balanced magnetic field does not change significantly. Even when a temperature difference of the first coil $127_1$ and the second coil $127_2$ is large, the current level thereto may change but the balanced magnetic field is not disturbed because the coils $127_1$ and $127_2$ are connected in series. Because the third coils $127_{41}$ and $127_{42}$ are connected in parallel, when there is a temperature difference therebetween, the resistances thereof change and the current level changes, and hence the balanced magnetic field may be disturbed. However, as seen from Fig. 14, the coils $127_{41}$ and $127_{42}$ are arranged closely to each other so that the temperature difference is small, and the number of turns of the coils $127_{41}$ and $127_{42}$ is much smaller than the number of turns of the coils $127_1$ and $127_2$. Accordingly, the third coils $127_{41}$ and $127_{42}$ do not significantly disturb the balanced magnetic field.

**Claims**

1. An apparatus for measuring a change along a predetermined direction of a surface position of a metallic mass (17) comprising:
a magnetic sensing type metal sensor (1) reciprocally movable along said predetermined direction and arranged in spaced relation to said surface position, drive means (6, 7, 14, 15) operative to drive said sensor (1) along said predetermined direction,
follow-surface means (5) for comparing an output of said sensor (1) with a predetermined reference distance value and activating said drive means (6, 7, 14, 15) in accordance with a difference signal of the comparison for causing said sensor (1) to follow the change along said predetermined direction of the surface position of said metallic mass (17),
means (2, 8, 9) for producing a position signal indicative of a current position of the sensor (1) along a moving path thereof and determining the surface position of said metallic mass (17) based on said position signal, characterized by:
noise storing means (29, 30, 26, 19, 21, 22, 24) for measuring a noise component in the output of said sensor (1) due to factors other than the change of the surface position of said metallic mass (17) and storing said noise component; and
correction means (12) for correcting said difference signal by said noise component stored in said storing means (29, 30, 26, 19, 21 22) for activating said drive means (6, 7, 14, 15) by the corrected signal.

2. An apparatus according to Claim 1 wherein said storing means includes means (19) for producing an address signal corresponding to each of predetermined positions of said sensor along the moving path of said sensor based on the position signal produced by said position signal producing means and means (22) for storing a noise component, which is detected by said sensor when said sensor is located at each of said predetermined positions, at an area addressed by the address signal corresponding to the position where said sensor is located, and said correction means corrects the output of said sensor by the noise component stored in said storing means at the area addressed by the address signal corresponding to the sensor position determined by the position signal produced by said position signal producing means.

3. An apparatus according to claim 2, wherein said position signal is indicative of the position of said sensor relative to the lowest position of the sensor in its moving path and said noise component is a value of the output of said sensor obtained when the metallic mass is removed.

4. An apparatus according to claim 2, wherein said position signal is indicative of the position of said sensor relative to the lowest position of the sensor in its moving path and said noise component is a value of the output of said sensor obtained when said sensor is spaced by a predetermined distance from a non-magnetic metallic plate disposed in place of said metallic mass to be measured.

5. An apparatus according to Claim 1 or 2, wherein said drive means comprises a servomotor (7), a drum (15) rotatable by said servomotor, strip-like power transmitting means including an elongated strip (14) which is connected at one end to said sensor (1) and at the other end to said drum (15) to be wound thereon and made of flexible and linearly restitutive material, and guide means (18) for guiding said strip to horizontally extend from said drum to a space closely above said mold and to bend the strip to form a right angle at a point above said mold so as to vertically extend downward so that said one end of said strip is movable along the moving path of said sensor.

6. An apparatus according to claim 1, further comprising a horizontally extending supporting arm (101) extending between its two opposite end portions, one of which is located above the surface of the metallic mass (17) to be measured, wherein said sensor (1) is mounted in a heat-resistant and non-magnetic enclosure (124) which is supported on the one end portion of said supporting arm, and wherein said drive means includes a driving mechanism (6, 7; 104, 106) supported on the other end portion of said supporting arm and having drive source (6, 104), a reversibly movable member (15; 113, 111, 106) connected to said driving mechanism, so as to be reversibly moved by said drive source, strip means (14; $120_1$, $120_2$) made of flexible and linearly restitutive material and connected at its one end to said enclosure (124) and at its other end to said reversibly movable member, and guide means (18; 117, 123) for movably guiding said strip means in such a manner that said strip means extends horizontally along said supporting arm from said driving means to the one end portion of said supporting arm and extends downward from said one portion so that said enclosure is vertically moved above the surface of said metallic mass when said driving means is driven by said drive source.

**Patentansprüche**

1. Vorrichtung zum Messen einer Änderung in einer vorbestimmten Richtung einer Oberflächenposition einer Metallmasse (17), die aufweist:

einen Metallsensor (1), der auf magnetischer Basis abfühlt und der in der vorbestimmten Richtung hin-und zurück-bewegbar ist, sowie in einem Abstand bezüglich der Oberflächenposition angeordnet est,

eine Antriebseinrichtung (6, 7, 14, 15), die im Betriebszustand den Sensor (1) in der vorbestimmten Richtung bewegt,

eine Folgeflächeneinrichtung (5), die einen Ausgang des Sensors (1) mit einem vorbestimmten Bezugsabstandswert vergleicht und die Antriebseinrichtung (6, 7, 14, 15) nach Maßgabe eines Differenzsignales des Vergleiches aktiviert, um zu bewirken, daß der Sensor (1) der Änderung in der vorbestimmten Richtung der Oberflächenposition der Metallmasse (17) folgt, und

Einrichtungen (2, 8, 9), welche ein Positionssignal erzeugen, das eine momentane Position des Sensors (1) auf einer Bewegungsbahn derselben wiedergibt und die die Oberflächenposition der Metallmasse (17) basierend auf dem Positionssignal bestimmen, gekennzeichnet durch:

eine Störsignalpeichereinrichtung (29, 30, 26, 19, 21, 22, 24) zum Messen einer Störkomponente im Ausgang des Sensors (1) infolge von anderen Einflußgrößen als der Änderung der Oberflächenposition der Metallmasse (17) und zum Speichern der Störkomponente, und

eine Korrektureinrichtung (12), die das Differenzsignal um die in der Speichereinrichtung (29, 30, 26, 19, 21, 22) gespeicherte Störkomponente korrigiert, um die Antriebseinrichtung (6, 7, 14, 15) mit diesem korrigierten Signal zu aktivieren.

2. Vorrichtung nach Anspruch 1, bei der die Speichereinrichtung eine Einrichtung (19) enthält, die ein Adreßsignal entsprechend jedem der vorbestimmten Positionen des Sensors auf der Bewegungsbahn des Sensors basierend auf dem Positionssignal erzeugt, das von der Positionssignalerzeugungseinrichtung geliefert wird, und eine Einrichtung (22) zum Speichern einer Störkomponente, die von dem Sensor detektiert wird, wenn der Sensor sich an der jeweiligen vorbestimmten Position befindet, wobei die Störkomponente in einem durch das Adreßsignal adressierten Bereich entsprechend der Position abgespeichert wird, in der sich der Sensor befindet, und daß die Korrektureinrichtung den Ausgang des Sensors um die in der Speichereinrichtung as dem durch das Adreßsignal entsprechend der Sensorposition adressierten Bereich gespeicherte Störkomponente korrigiert, wobei die Sensorposition durch das Postionssignal bestimmt wird, das von der Positionssignalerzeugungseinrichtung geliefert wird.

3. Vorrichtung nach Anspruch 2, bei der das Positionssignal die Position des Sensors relativ zur untersten Position des Sensors auf seinem Bewegungsweg wiedergibt und daß die Störkomponente ein Wert des Ausgangs des Sensors ist, den man erhält, wenn die Metallmasse entfernt ist.

4. Vorrichtung nach Anspruch 2, bei der das Positionssignal die Position des Sensors relativ zur untersten Position des Sensors auf seinem Bewegungsweg wiedergibt und bei der die Störkomponente ein Wert des Ausgangs des Sensors ist, den man erhält, wenn der Sensor sich in einem vorbestimmten Abstand von einer nichtmagnetischen Metallplatte befindet, die anstelle der zu messenden Metallmasse angeordnet ist.

5. Vorrichtung nach Anspruch 1 oder 2, bei der die Antriebseinrichtung einen Servomotor (7), eine Trommel (15), die vom Servomotor drehbar ist, eine bandähnliche Kraftübertragungseinrichtung, die ein längliches Band (14) enthält, das mit einem Ende mit dem Sensor (1) und mit dem anderen Ende mit der Trommel (15) verbunden ist, um auf diese gewickelt zu werden, und das aus einem flexiblen und linear rückstellbaren Material besteht und eine Führungseinrichtung (18) zum Führen des Bandes in der Weise aufweist, daß es horizontal von der Trommel zu einem Raum unmittelbar oberhalb der Form verläuft und die Bahn unter Bildung eines rechten Winkels an einer Stelle oberhalb der Form ablenkt, um sich vertikal nach unten zu erstrecken, so daß ein Ende des Bandes längs des Bewegungsweges des Sensors bewegbar ist.

6. Vorrichtung nach Anspruch 1, die ferner einen horizontal verlaufenden Tragarm (101) aufweist, der sich zwischen seinen beiden Gegenüberliegenden Endabschnitten erstreckt, von denen einer oberhalb der Oberfläche der zu messenden Metallmasse (17) liegt, bei der der Sensor (1) an einer wärmebeständigen und nicht-magnetischen Verkleidung (124) angebracht ist, die auf dem einen Endabschnitt des Tragarms abgestützt ist, und bei der die Antriebseinrichtung einen Antriebsmechanismus (6, 7; 104, 106) enthält, der auf dem anderen Endabschnitt des Tragarmes gelagert ist und eine Antriebsquelle (6, 104) ein hin- und zurückbewegbares Element (15; 113, 111, 106), das mit dem Antriebsmechanismus verbunden ist, so daß es durch die Antriebsquelle hin- und zurückbewegbar ist, eine Bandeinrichtung (14; 120₁, 120₂) aus einem flexiblen und linear zurückstellbaren Material, die mit einem Ende mit der Verkleidung (24) und in ihrem anderen Ende mit dem hin- und zurückbewegbaren Element verbunden ist, eine eine Führungseinrichtung (18; 117, 123) hat, die die Bandeinrichtung derart beweglich führt, daß die Bandeinrichtung längs des Tragarmes von der Antriebseinrichtung zu dem einen Endabschnitt des Tragarmes horizontal verläuft und von einem Abschnitt aus nach unten verläuft, so daß die Verkleidung vertikal über der Oberfläche der Metallmasse bewegt wird, wenn die Antriebseinrichtung von den Antriebsquelle angetrieben ist.

## Revendications

1. Appareil pour mesurer un changement, selon une direction prédéterminée, de la position de la surface d'une msse métallique (7) comportant:

une sonde métallique (1) du type à détection magnétique que peut prendre un mouvement de va-et-vient selon ladite direction prédéterminée et qui est disposée à une certaine distance de ladite position de la surface,

des moyens d'entrainement (6, 7, 14, 15) opérationnels pour entrainer ladite sonde (1) selon ladite direction prédéterminée,

des moyens de suivi de surface (5) pour comparer un signal de sortie de ladite sonde (1) avec une valeur de référence prédéterminée de la distance et pour mettre en action lesdits moyens d'entrainement (6, 7, 14, 15) en accord avec un signal de différence de la comparaison pour faire en sorte que ladite sonde (1) suive le changement de la position de la surface de ladite masse métallique (17) selon ladite direction prédéterminée,

des moyens (2, 8, 9) pour produire un signal de position indicatif de la position en cours de la sonde (1) le long de son trajet et pour déterminer la position de la surface de ladite masse métallique (17) sur la base dudit signal de position, caractérisé

par des moyens de mémorisation du bruit (29, 30, 26, 19, 21, 22, 24) pour mesurer, dans le signal de sortie de ladite sonde (1), une composante du bruit due à des facteurs autres que le changement de la position de la surface de ladite masse métallique (17) et pour mémoriser ladite composante du bruit; et

des moyens de correction (12) pour corriger ledit signal de différence par ladite composante du bruit mémémorisée dans lesdits moyens de mémorisation (29, 30, 26, 19, 21, 22) pour faire mettre en action lesdits moyens d'entrainement (6, 7, 14, 15) par le signal corrigé.

2. Appareil selon la revendication 1, dans lequel lesdits moyens de mémorisation comportent des moyens (19) pour produire un signal d'adresse correspondant à chacune des positions prédéterminées de ladite sonde le long du trajet de ladite sonde sur la base du signal de position produit par lesdits moyens de production du signal de position, ainsi que des moyens (22) pour mémoriser, dans une zone désignée par le signal d'adresse correspondant à la position où ladite sonde est située, une composante du bruit que est détectée par ladite sonde lorsque ladite sonde est située à chacune desdites positions prédéterminées, et dans lequel ledit moyen de correction corrige le signal de sortie de ladite sonde au moyen de la composante du bruit mémorisée dans lesdits moyens de mémorisation dans la zone désignée par le signal d'adresse correspondant à la position de la sonde dèterminée par le signal de position produit par lesdits moyens de production du signal de position.

3. Appareil selon la revendication 2, dans lequel ledit signal de position indique la position de ladite sonde par rapport à la position la plus basse de la sonde sur son trajet et dans lequel ladite composante de bruit est la valeur du signal de sortie de ladite sonde obtenue lorsque l'on a enlevé la masse métallique.

4. Appareil selon la revendication 2, dans lequel ledit signal de position indique la position de ladite sonde par rapport à la position la plus basse de la sonde sur son trajet et dans lequel ladite composante de bruit est la valeur du signal de sortie de ladite sonde obtenue lorsque ladite sonde se trouve à une distance prédéterminée d'une plaque métallique non magnétique disposée à la place de ladite masse métallique à mesurer.

5. Appareil selon la revendication 1 ou 2, dans lequel lesdits moyens d'entrainement comportent un servomoteur (7), un tambour (15) que ledit servomoteur peut entrainer en rotation, un moyen de transmission de l'énergie analogue à un ruban, incluant un ruban de forme allongé (14) qui est relié, à une première extrémité, à ladite sonde (1) et à l'autre extrémité audit tambour (15) pour y être enroulé et qui est fabriqué en un matériau souple et à dimensions linéaires permanentes, ainsi que des moyens de guidage (18) pour guider ledit ruban pour s'étendre horizontalement depuis ledit tambour jusqu'a un espace très près au-dessus dudit moule et pour cintrer le ruban pour former un angle droit en un point situé au-desus dudit moule de façon à s'étendre verticalement vers le bas de façon que ladite première extrémité dudit ruban puisse se déplacer le long du trajet de ladite sonde.

6. Appareil selon la revendication 1, comportant en outre un bras support (101) qui s'étend horizontalement entre ces deux portions d'extrémité opposées, dont l'une est située au-dessus de la surface de la masse métallique (17) à mesurer, étant précisé que ladite sonde (1) est montée dans une enceinte réfractaire à la chaleur et non magnétique (124) qui est supportée sur la première portion d'extrémité dudit bras support, et étant précisé que lesdits moyens d'entrainement comportent un mécanisme d'entrainement (6, 7; 104, 106) supporté sur l'autre portion d'extrémité dudit bras support et comportant une source d'entrainement (6, 104), un élément qui peut prendre un mouvement réversible (15; 113, 111, 106) relié audit mécanisme d'entrainement de façon à être entrainé de façon réversible par ladit source d'entrainement, des moyens formant ruban (14; $120_1$, $120_2$) fabriqué en un matériau souple et à dimensions linéaires permanentes et relié, à sa première extrémité, à ladite enceinte (124) et, à son autre extrémité, audit élément qui peut prendrer un mouvement réversible, et comportant aussi des moyens de guidage (18; 117, 123) pour guider en déplacement ledit moyen formant ruban de façon telle que ledit moyen formant ruban s'étende horizontalement le long dudit bras support depuis ledit moyen d'entrainement jusqu'à la première portion d'extrémité dudit bras support puis s'étende vers le bas depuis ladite première portion d'extrémité de façon que ladite enceinte se déplace verticalement au-dessus de la surfce de ladite masse métallique lorsque ledit moyen d'entrainement est entrainé par ladite source d'entrainement.

# F I G. 1

F I G. 2

# FIG. 3

MOLD SPACING 140mm

RELATIVE POSITION OF SENSOR TO MOLD (mm)

LEVEL OUTPUT (mm)

NOISE BY MOLD

IDEAL VALUE

SENSOR DC OUTPUT

CORRECTED VALUE

TO INSIDE OF MOLD

PRIOR ART VALUE

MOLD TOP

LEAD PLATE POSITION (mm)

# F I G. 4

MOLD SPACING 160 mm

RELATIVE POSITION OF SENSOR TO MOLD (mm)

LEVEL OUTPUT (mm)

NOISE BY MOLD

IDEAL VALUE

SENSOR DC OUTPUT

0   -0.5   -1.0

CORRECTED VALUE

TO INSIDE OF MOLD

PRIOR ART VALUE

-20   -40   -60   -80   -100   LEAD PLATE POSITION (mm)

MOLD TOP

# F I G. 5

F I G.   6

# F I G. 7

0 067 668

FIG. 8

```
        ▽ START
             │
    ┌────────┴────────┐  ⌐801
    │   INITIALIZE     │
    │     N=0          │
    │ MOVE SENSOR TO   │
    │  TOP POSITION    │
    └────────┬────────┘
             │          ⌐802
    ┌────────┴────────┐
    │   MOVE DOWN      │
    │  SENSO AT SLOW   │
    │     SPEED        │
    └────────┬────────┘
             │          ⌐803
    ┌────────┴────────┐
    │  A/D- CONVERT    │
    │   INPUT 3 TO     │
    │   PRODUCE D      │
    └────────┬────────┘
             │          ⌐804
    YES  ◇───┴───◇
   ◄─────  D=N ?
         ◇───┬───◇
             │ NO
             │          805
         ◇───┴───◇  YES
          D=DL ?  ─────────────────┐
         ◇───┬───◇                 │
             │ NO          ┌───────┴────────┐
    ┌────────┴──┐ ⌐806     │  STOP SENSOR    │ ⌐809
    │   N − D    │         │ MOVE UP SENSOR  │
    └────────┬──┘         │  AT SLOW SPEED  │
             │            └───────┬────────┘
             │  ⌐807               │        ⌐810
    ┌────────┴────────┐   ┌───────┴────────┐
    │  A/D- CONVERT    │   │  A/D-CONVERT    │
    │   INPUT 2 TO     │   │   INPUT 3 TO    │
    │   PRODUCE P      │   │   PRODUCE D     │
    └────────┬────────┘   └───────┬────────┘
             │  ⌐808               │        ⌐811
    ┌────────┴────────┐        ◇───┴───◇  NO
    │   WRITE P AT     │         D=DU ? ──────►
    │   ADDRESS N      │        ◇───┬───◇
    └─────────────────┘            │ YES  ⌐812
                            ┌───────┴────────┐
                            │  STOP SENSOR    │
                            └───────┬────────┘
                                    │
                                    ▽ STOP
```

FIG. 9

```
        ┌──────────┐
         \  START  /
          \──────/
```

**901**
A/D-CONVERT
INPUT I TO PRODUCE
S WRITE S IN RAM

**902**
A/D-CONVERT
INPUT 2 TO PRODUCE
M WRITE M IN RAM

**903**
A/D-CONVERT
INPUT 3 TO PRODUCE
X WRITE X IN RAM

**904**
CALCULATE
$X + S = N$

**905**
READ OUT DATA P
AT ADDRESS N

**906**
CALCULATE
$M - P$

**907**
$M - P = K$ ?

YES → STOP SENSOR

NO

**908**
$M - P > S$

NO **909**
MOVE SENSOR IN
DIRECTION TO
INCREASE M

YES **910**
MOVE SENSOR IN
DIRECTION TO
REDUCE M

# F I G. 10

# F I G. 11

F I G. 12

125    101

119
123
120₁
122

120₂
130
127₁
127₃
127₂

128

124    126    129

F I G. 13

131    129
120₁    120₂
133₁    133₂
132    125

F I G. 14

127₁
1274₁
12742
1273
1272
126

ELECTRICAL
COIL
ENERGIZATION
~ AC
143

DISTANS
DETECTOR
121    137

11

# FIG. 15